(19) Europäisches Patentamt / European Patent Office / Office européen des brevets

(11) **EP 2 430 614 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(51) Int Cl.:
**G06T 7/00** (2006.01)

(21) Anmeldenummer: **10728584.3**

(22) Anmeldetag: **06.05.2010**

(86) Internationale Anmeldenummer:
**PCT/DE2010/000506**

(87) Internationale Veröffentlichungsnummer:
**WO 2010/130245 (18.11.2010 Gazette 2010/46)**

(54) **VERFAHREN ZUR ECHTZEITFÄHIGEN, RECHNERGESTÜTZTEN ANALYSE EINER EINE VERÄNDERLICHE POSE ENTHALTENDEN BILDSEQUENZ**

METHOD FOR THE REAL-TIME-CAPABLE, COMPUTER-ASSISTED ANALYSIS OF AN IMAGE SEQUENCE CONTAINING A VARIABLE POSE

PROCÉDÉ D'ANALYSE EN TEMPS RÉEL ASSISTÉE PAR ORDINATEUR D'UNE SÉQUENCE D'IMAGES CONTENANT UNE POSE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.05.2009 DE 102009020732**

(43) Veröffentlichungstag der Anmeldung:
**21.03.2012 Patentblatt 2012/12**

(73) Patentinhaber: **Universität zu Lübeck**
**23538 Lübeck (DE)**

(72) Erfinder:
- **HAKER, Martin**
  **23552 Lübeck (DE)**
- **BARTH, Erhardt**
  **23626 Ratekau/Ovendorf (DE)**
- **MARTINETZ, Thomas**
  **23564 Lübeck (DE)**

(74) Vertreter: **Appelt, Christian W.**
**Boehmert & Boehmert**
**Pettenkoferstrasse 20-22**
**80336 München (DE)**

(56) Entgegenhaltungen:
- **PIA BREUER ET AL: "Hand Gesture Recognition with a Novel IR Time-of-Flight Range Cameraâ A Pilot Study" 28. März 2007 (2007-03-28), COMPUTER VISION/COMPUTER GRAPHICS COLLABORATION TECHNIQUES; [LECTURE NOTES IN COMPUTER SCIENCE;;LNCS], SPRINGER BERLIN HEIDELBERG, BERLIN, HEIDELBERG, PAGE(S) 247 - 260 , XP019078190 ISBN: 978-3-540-71456-9 in der Anmeldung erwähnt das ganze Dokument**
- **WUNSCH P ET AL: "Real-time pose estimation of 3D objects from camera images using neural networks" ROBOTICS AND AUTOMATION, 1997. PROCEEDINGS., 1997 IEEE INTERNATIONAL C ONFERENCE ON ALBUQUERQUE, NM, USA 20-25 APRIL 1997, NEW YORK, NY, USA,IEEE, US LNKD- DOI:10.1109/ROBOT.1997.606781, Bd. 4, 20. April 1997 (1997-04-20), Seiten 3232-3237, XP010235459 ISBN: 978-0-7803-3612-4**
- **HAIYING GUAN ET AL: "The Isometric Self-Organizing Map for 3D Hand Pose Estimation" AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE LNKD- DOI: 10.1109/FGR.2006.103, 10. April 2006 (2006-04-10), Seiten 263-268, XP010911565 ISBN: 978-0-7695-2503-7**

EP 2 430 614 B1

- MALASSIOTIS S ET AL: "Real-time hand posture recognition using range data" IMAGE AND VISION COMPUTING, ELSEVIER, GUILDFORD, GB LNKD- DOI:10.1016/J.IMAVIS.2007.11.007, Bd. 26, Nr. 7, 2. Juli 2008 (2008-07-02), Seiten 1027-1037, XP022618942 ISSN: 0262-8856 [gefunden am 2007-12-04]

- MARTIN HAKER ET AL: "Self-Organizing Maps for Pose Estimation with a Time-of-Flight Camera" 9. September 2009 (2009-09-09), DYNAMIC 3D IMAGING, SPRINGER BERLIN HEIDELBERG, BERLIN, HEIDELBERG, PAGE(S) 142 - 153 , XP019126929 ISBN: 978-3-642-03777-1 das ganze Dokument

## Beschreibung

Die Erfindung betrifft ein Verfahren zur echtzeitfähigen, rechnergestützten, fortlaufenden Analyse einer Bildsequenz, die eine veränderliche Pose eines aus gegeneinander beweglichen und miteinander verbundenen Elementen bestehenden Objekts enthält.

Die Erfindung betrifft insbesondere die Schätzung der Positionen und Orientierungen von Torso und Extremitäten eines lebenden, sich während der Bildsequenz bewegenden Menschen, d.h. die Schätzung einer menschlichen Körperpose.

Die Schätzung von menschlicher Pose in drei Dimensionen (i. F. 3D) wird bereits in einer Reihe von wissenschaftlichen Arbeiten untersucht. Manche Arbeiten haben sich dabei auf die Rekonstruktion von menschlicher Pose aus 2D Daten, die mit einer herkömmlichen Kamera aufgenommen wurden, konzentriert.

In Agarwal, A., Triggs, B.: Recovering 3D Human Pose from Monocular Images. In: IEEE Transactions on Pattern Analysis and Machine Intelligence 28(1) (2006) 44-58 wird die Pose aus Gestaltdeskriptoren von Silhouetten des menschlichen Körpers gewonnen.

Die Autoren von Rosales, R., Sclaroff, S.: Inferring Body Pose Without Tracking Body Parts. In: Proceedings of Computer Vision and Pattern Recognition (2000) 721-727 bilden einfache visuelle Merkmale des segmentierten Körpers auf eine Reihe von möglichen Konfigurationen des Körpers ab und identifizieren die Pose durch die Konfiguration, die bei den gegebenen visuellen Merkmalen am wahrscheinlichsten ist.

Ein weiterer Ansatz in Shakhnarovich, G., Viola, P., Darrell, T.: Fast Pose Estimation with Parameter-Sensitive Hashing. In: Proceedings of International Conference on Computer Vision (2003) 750-757 nutzt eine große Datenbank mit Beispielbildern menschlicher Posen, und die Autoren verwenden parameter-sensitive Hashing-Funktionen, mit denen zu einer gegebenen Pose die ähnlichste Beispielpose in der Datenbank aufgesucht wird.

Ein großer Nachteil aller auf 2D Daten basierenden Verfahren ist, dass die Segmentierung der Person, deren Pose geschätzt werden soll, besonders in Szenen mit komplexem Hintergrund schwierig ist. Nicht zuletzt geht dies zu Lasten der Rechnerleistung und damit der Geschwindigkeit.

Eine weitere Schwierigkeit von 2D Bildern besteht darin, Extremitäten zu detektieren, die in Richtung auf die Kamera zeigen, jedoch in der 2D Projektion einen Teil des Oberkörpers verdecken. In einer solchen Situation sind die Extremitäten in der Silhouette nicht mehr zu erkennen und eine Detektion wird aufwendig.

Eine Posenschätzung basierend auf 3D Daten wird beispielsweise in Weik, S., Liedtke, C.-E.: Hierarchical 3D Pose Estimation for Articulated Human Body Models from a Sequence of Volume Data. In: Robot Vision (2001) 27-34 behandelt. Dort wird das 3D Volumen einer Person mittels eines Multi-Kamera-Aufbaus über das shape-from-silhouette Verfahren erfasst. Anschließend wird eine 2D Projektion des Volumens mit einer virtuellen Kamera berechnet und an diese ein menschliches Skelettmodells angepasst. Zur Schätzung der 3D Pose wird das Skelettmodell daraufhin durch die Invertierung der 2D Projektion in den 3D Raum zurück überführt.

Nachteile des Verfahrens von Weik und Liedtke sind, dass die Ermittlung des 3D Volumens in einer speziellen Vorrichtung mit mehreren Kameras vor einem einheitlich grünen Hintergrund stattfindet und die Berechnung des 3D Volumens ein aufwendiges Verfahren darstellt.

Ein weiterer Ansatz zur Berechnung eines Skelettmodells in 3D ist die Ausdünnung von volumetrischen Daten direkt im dreidimensionalen Raum (Palagyi, K., Kuba, A.: A Parallel 3D 12-Subiteration Thinning Algorithm. In: Graphical Models and Image Processing 61(4) (1999) 199-221). Die menschliche Pose kann anschließend mittels des Skelettmodells geschätzt werden.

Eine Methode zur Posenschätzung basierend auf Stereoskopie wurde in Yang, H.-D., Lee, S.-W.: Reconstructing 3D Human Body Pose from Stereo Image Sequences Using Hierarchical Human Body Model Learning. In: ICPR '06: Proceedings of the 18th International Conference on Pattern Recognition (2006) 1004-1007 veröffentlicht. Die Autoren führen ein hierarchisches Modell des menschlichen Körpers ein. Für eine gegebene Aufnahme werden sowohl die Silhouette als auch die Tiefeninformation genutzt, um die Pose mit der besten Übereinstimmung in der Datenbank zu finden.

Ein Nachteil an diesem Ansatz ist das mit einem hohen Rechenaufwand verbundene Verfahren der Stereoskopie. Zudem liefert die Stereöskopie nur dann zuverlässige Tiefendaten, wenn in der jeweiligen Szene ausreichende Struktur vorhanden ist

Eine Posenschätzung mit Hilfe einer Selbst-Organisierenden Karte ("self organizing map", SOM) ist in Winkler, S., Wunsch, P., Hirzinger, G.: A Feature Map Approach to Real-Time 3-D Object Pose Estimation from Single 2-D Perspective Views. In: Mustererkennung 1997 (Proc. DAGM) (1997) 129-136 zu finden.

Eine SOM ist ein spezielles neuronales Netz, das auf eine Aufgabe trainiert werden kann. Die SOM wird hier dazu benutzt, um eine Abbildung von einem 64 dimensionalen Merkmalsraum in den dreidimensionalen Raum der möglichen Rotationen eines starren Objektes zu lernen. Als Trainingsdaten dienen künstlich generierte Ansichten des starren Objektes. Grundlage für die Anwendung des Verfahrens sind 2D Farbaufnahmen des Objektes. Basierend auf der Farbinformation wird das Objekt in den Bildern lokalisiert und ausgeschnitten. Anschließend wird das Bild mit einem Sobeloperator bearbeitet, der auf plötzliche Kontrastunterschiede im Bild, sogenannte Kanten, anspricht und entsprechenden Regionen werden hohe Pixelwerte zuordnet. Im Gegensatz dazu erhalten einheitlich gefärbte Regionen Pixelwerte nahe Null. Zuletzt wird aus diesem Kantenbild durch Reduzierung der Auflösung ein Bild von acht kreuz acht Pixeln erzeugt, deren 64 Pixelwerte dem Merkmalsvektor entsprechen. Die SOM bildet den daraus resultierenden Merkmalsvektor auf eine von 360 möglichen Orientierungen in 3D ab.

Zu den Nachteilen des Verfahrens von Winkler et al. zählt, dass die Methode ausschließlich starre Körper behandelt und somit nicht für die Schätzung von menschlicher Pose in 3D einsetzbar ist. Weiterhin basiert das Verfahren im Wesentlichen auf der Extraktion von Kanteninformationen mittels des Sobeloperators. Im Falle von Personen, die in der Regel unterschiedliche Kleidung tragen, und in komplexen, natürlichen Szenen bei variierenden Beleuchtungsbedingungen aufgenommen werden, ist davon auszugehen, dass keine eindeutige Repräsentation durch Kanteninformationen möglich ist.

Eine weitere Alternative für die Posenschätzung basiert auf time-of-flight (TOF) Kameras. Eine 3D-TOF-Kamera liefert nicht nur wie gewöhnliche Kameras ein Helligkeitsbild, sondern kann zusätzlich den Abstand zum Objekt messen. Die Kamera sendet Infrarotlicht aus, das sinusförmig moduliert wird. In jedem Pixel wird die Phasenverschiebung zwischen dem ausgesandten und dem vom Objekt reflektierten Licht gemessen. Aus dieser Phasenverschiebung lässt sich die Laufzeit ("Time of Flight") des Lichts und damit der Abstand der Kamera zum Objektpunkt berechnen. Eine TOF Kamera liefert eine Tiefenkarte, die perfekt mit einem Helligkeitsbild (in der TOF-Nomenklatur oft als Amplitudenbild bezeichnet) registriert ist. Damit stellt sie einen attraktiven Sensor für eine ganze Reihe von Anwendungen in der Bildverarbeitung dar. Eine TOF Kamera liefert nur ein 2½ D Bild der Szene, dieses jedoch mit einer hohen Bildrate und ohne zusätzlichen Rechenaufwand.

In Zhu, Y., Dariush, B., Fujimura, K.: Controlled Human Pose Estimation from Depth Image Streams. CVPRW '08 IEEE Computer Society Conference on Computer Vision and Pattern Recognition Workshops (2008) 1-8 wird eine Reihe von anatomischen Landmarken über die Zeit hinweg in 3D verfolgt. Aus den dreidimensionalen Positionen dieser Landmarken wird die Pose eines beweglichen menschlichen Modells geschätzt. Das Modell wird wiederum dazu genutzt, um Uneindeutigkeiten bei der Detektion der Landmarken aufzulösen sowie Schätzungen über die Position undetektierter Landmarken zu liefern. Das Verfahren von Zhu et al. modelliert u. a. Rahmenbedingungen wie maximale Beugungswinkel der Gelenke und die Vermeidung des gegenseitigen Eindringens verschiedener Körperteile. Trotz der Komplexität des Modells läuft das Verfahren mit einer Bildrate von immerhin 10 Bildern pro Sekunde.

Da konventionelle Videosequenzen allerdings mit einer Bildfrequenz von 25 Hz arbeiten, wäre eine echtzeitfähige Posenschätzung mit entsprechender Bildrate wünschenswert. Die Aufgabe der Erfindung ist aber ganz allgemein darin zu sehen, Bildinformationen (Farbwerte auf Pixeln) nach der elektronischen Aufzeichnung bzw. Übersetzung für Maschinen interpretierbar zu machen. Die Einschätzung menschlicher Posen stellt eine Teilaufgabe der Computer Vision dar, die grundsätzlich zwei Probleme aufweist:

(1) Die Pose muss schnell bestimmt und bei Veränderung aktualisiert werden können; wünschenswert ist hierbei eine Videorate von 25 Hz.
(2) Der Mensch, dessen Pose bestimmt werden soll, befindet sich gewöhnlich nicht in einem idealen Environment, sondern vielmehr vor einem unbekannten oder zumindest kaum kontrollierbaren Hintergrund.

Zudem soll der apparative Aufwand für die Lösung der Aufgabe nicht zu hoch sein. Ein gängiger PC und eine relativ simple Kameraanordnung sollen dafür ausreichen.

Aus dem Stand der Technik sind TOF-Kameras bekannt, die das Problem der Separierung von Vorder- und Hintergrund besonders einfach zu lösen erlauben. Eine TOF-Kamera erzeugt ein 2,5-dimensionales Bild (2 Dimensionen plus Abstand zur Kamera). Objektpunkte, die entlang der Sichtlinie der Kamera durch andere Objektpunkte verdeckt werden, können nicht erfasst werden. Von einem Objekt steht nur die vordere, sichtbare Oberfläche des Objekts als Punktwolke im 3D-Raum zur Verfügung, um daraus auf die Pose des 3D-Objekts zu schließen.

In der oben genannten Schrift Sebastian Welk, C.-E. Liedtke "Hierarchical 3D Pose Estimation for Articulated Human Body Models from a Sequence of Volume Data" Proc. of the International Workshop on Robot Vision table of contents, 2001 wird keine TOF-Kamera verwendet, sondern nicht weniger als 16 elektronische Kameras und bedarf eines einfarbigen Hintergrundes, um eine dreidimensionale Modellierung eines Menschen anhand seiner Silhouetten aus verschiedenen Richtungen vorzunehmen.

In Martin Haker, Martin Böhme, Thomas Martinetz & Erhardt Barth "Deictic gestures with atime-of-flight camera" GW 2009, The 8th International Gesture Workshop - Feb 25-27, at the ZiF-Center for Interdisciplinary Research at Bielefeld University, Germany, 2009 kommt eine TOF-Kamera zum Einsatz, um eine Person vor einem beliebigen Hintergrund schnell zu erkennen. Die Interpretation der "Pose" ist jedoch geradezu rudimentär, zum Beispiel heißt es dort: "We find the head and hand using a simple but effective heuristic: The initial guess for the hand is the topmost pixel in the leftmost pixel column of the silhouette; the head is the topmost pixel in the tallest pixel column." also *"Wir finden den Kopf und die Hand mit einer einfachen, aber effektiven Heuristik: Der Startwert für die Hand ist das oberste*

*Pixel in der linken Spalte der Pixel-Silhouette, der Kopf ist die oberste Pixel in der höchsten Pixelspalte. "*

Anders ausgedrückt: Egal, welcher Körperteil sich am weitesten rechts im Bild befindet, die Maschine hält ihn für die rechte Hand. Tatsächlich setzt die Nutzung dieser sehr einfachen Posenschätzung voraus, dass der Mensch seinen rechten Arm stets deutlich vom Körper abgespreizt hält, wenn er der Maschine etwa durch Bewegung dieser Hand Befehle erteilen möchte. Mit Gesten wie z.B. vor dem Körper gekreuzten Armen kann der dort beschriebene Ansatz gar nicht arbeiten.

Der Artikel Pia Breuer, Christian Eckes, Stefan Müller "Hand Gesture Recognition with a Novel IR Time-of-Flight Range Camera - A Pilot Study" Proceedings of the Mirage 2007, Computer Vision/Computer Graphics Collaboration Techniques and Applications, Rocquencourt, France, 28-30 March, pp. 247-260 schließlich hat das Ziel, die Pose einer menschlichen Hand möglichst schnell und genau aus einer mit TOF-Kamera erfassten Punktwolke zu bestimmen. Sie bedient sich dazu eines anatomischen Handmodells, das in den zuvor als die Hand repräsentierend isolierten Teil der Punktwolke eingepasst wird.

Diese Schrift bestimmt 7 Freiheitsgrade (3 Koordinaten, 3 Drehwinkel, 1 Skalierungsfaktor), um einen möglichst guten Fit zu erzielen (Minimierung der Kostenfunktion K). Das Handmodell selbst ist dabei starr und wird auch zu keiner Zeit verändert. Beispielsweise eine Rotation wirkt sich auf alle Knoten des Handmodells gleichzeitig aus, ohne dass es zu relativen Verschiebungen der Modellknoten kommt.

Das dort beschriebene Verfahren mag eine gute Einschätzung der Lage und der Verdrehung der Hand im 3D-Raum liefern, aber schon bei ausgeprägten Fingerbewegungen der einzuschätzenden Person würde es nicht mehr ohne weiteres funktionieren.

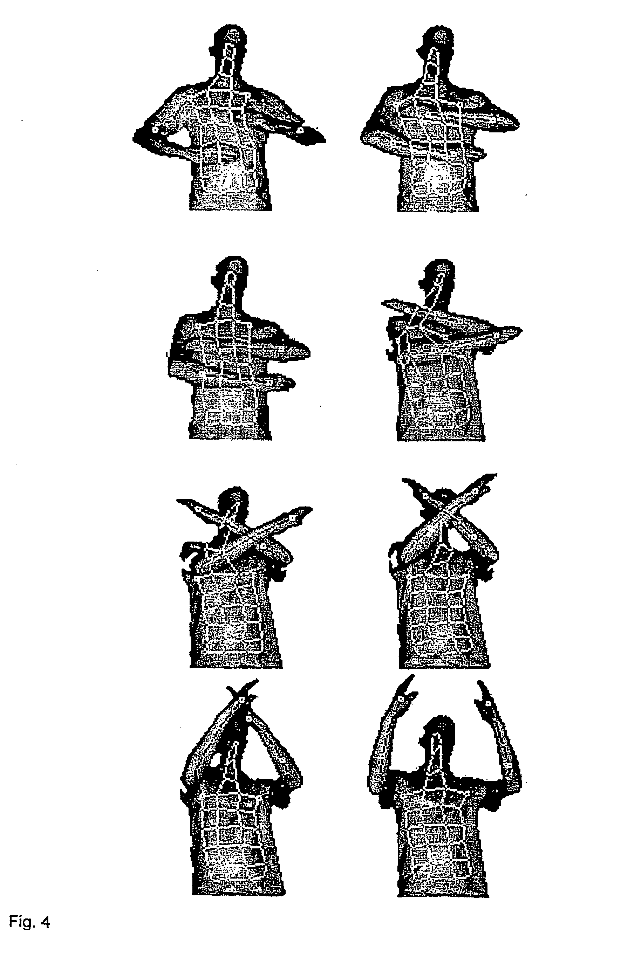

Die vorliegende Erfindung geht genau an dieser Stelle über den Stand der Technik hinaus. Auch sie verwendet ein Modell, das in die die Person repräsentierende Punktwolke eingepasst werden muss, jedoch ist das (Skelett- ) Modell einfach und zugleich in sich flexibel. Die Modellknotenpositionen selbst sind Gegenstand der Fitprozedur, und eben nicht nur globale Verschiebungen und Verdrehungen gegenüber der Punktwolke wie in der D1. Dabei wird die Nachbarschaftsstruktur der Knoten des Skelettmodells während des Fittens stets beibehalten, so dass bestimmte Knoten des Modells zwingend für den Torso, den Kopf und die Arme stehen. Das erstaunliche Ergebnis ist, dass selbst Annbewegungen vor dem Körper, insbesondere auch das Überkreuzen der Arme robust und in Echtzeit (in Videofrequenz) auszumachen sind (vgl. Fig. 4 der Beschreibung) . Das fortlaufende Aktualisieren der Knotenpositionen aus den vorangegangenen Bildern macht diese komplexe Bewegung für die Maschine erkennbar. Die Updateregel entspricht dabei der einer Selbst- Organisierenden Karte (SOM, Standard- Algorithmus der Theorie Neuronaler Netze, auch näher erläutert in der Anmeldung) , der hier erstmals in die Aufgabe der Posenschätzung eines in sich nicht starren Gegenstandes eingebunden wird, um dessen- unvorhersehbare- Bewegungen auf einen für Maschinen verarbeitbaren Datensatz abzubilden.

Es ist daher die Aufgabe der Erfindung, ein Verfahren zur Posenschätzung mittels einer TOF Kamera vorzustellen, das eine fortlaufende Bildanalyse und Posenberechnung mit mindestens 25 Bildern pro Sekunde erlaubt.

Diese Aufgabe wird gelöst durch ein Verfahren mit den Merkmalen des Hauptanspruchs. Die Unteransprüche geben vorteilhafte Ausgestaltungen an. Insbesondere kombiniert das Verfahren zur echtzeitfähigen, rechnergestützten Analyse einer eine veränderliche Pose enthaltenden Bildsequenz eines aus gegeneinander beweglichen und miteinander verbundenen Elementen bestehenden Objekts, wobei die Einzelbilder der Bildsequenz mit einer time-of-flight (TOF) Kamera computerbearbeitbar aufgezeichnet sind und Helligkeits- und Entfernungsdaten als Funktionen der Pixelkoordinaten der Kamera für jedes Bild der Sequenz aufweisen, mit seinen Schritten : Erfassen der das Objekt abbildenden Pixel eines Einzelbildes, Berechnen einer dreidimensionalen (3D) Punktwolke in einem virtuellen Raum, welche die für die Kamera sichtbare Oberfläche des Objekts repräsentiert, durch rechnerische Projektion objektabbildender Pixel in einen solchen Raum unter Berücksichtigung erfasster Entfernungsdaten zum Objekt, Einpassen eines aus Knoten und Kanten bestehenden Modells des Objekts in die rechnergenerierte 3D-Punktwolke zum Einzelbild, wobei die Knoten eine Auswahl von Elementen des Objekts und die Kanten die Verbindungen dieser Elemente untereinander repräsentieren, Iteratives Aktualisieren aller Knotenpositionen durch Anwenden einer Lernregel zum Trainieren einer Selbst-Organisierenden Karte mit einer vorab festgelegten Anzahl zufällig gewählter Punkte der Punktwolke, und Wiederholen der Schritte a. bis d. für jedes nachfolgende Einzelbild der Sequenz, wobei für das Einpassen beim Schritt c. jeweils das Ergebnis des Schrittes d. des vorangegangen Bildes benutzt wird, und dem letztendlichen Ermitteln der sich verändernden Pose aus den in wenigstens repräsentativen Bildern der Bildsequenz erfassten Positionen vorbestimmter Knoten des Modells die Verwendung einer TOF Kamera mit der Einpassung eines vereinfachten Skelettmodells in eine 3D Punktwolke, die die Vorderseite der einzuschätzenden Person repräsentiert, wobei diese Einpassung echtzeitfähig aktualisierbar ist, weil sie durch einen Lernalgorithmus für eine SOM realisiert wird.

Der Geschwindigkeitsvorteil der Bildsegmentierung durch die TOF Kamera und die schnell berechenbare SOM-Updateregel gestatten dann mit wenig Programmier- und Rechenaufwand eine robuste Posenschätzung bei bis zu 25 Bildern pro Sekunde auf einem 2.0 GHz PC.

Vorteilhafterweise werden die Kamerapixel, auf die das Objekt abgebildet wird, durch eine Bildsegmentierung der Bildsequenz der TOF Kamera bestimmt. Weiter werden bevorzugt zu jedem Bild zwei Schwellenwerte für Helligkeits- und Tiefendaten der TOF Kamera bestimmt und ein zusammenhängendes Gebiet von Kamerapixeln identifiziert, deren Messdaten größer als der Helligkeitsschwellenwert und kleiner als der Tiefenschwellenwert sind. Diese Helligkeitsdaten können dann wieder vorteilhafterweise in histogrammartig in Kanälen ausgewertet werden, so daß zwei Häufungspunkte identifiziert werden können und der Helligkeitsschwellenwert so eingestellt wird, dass er zwischen den Häufungspunkten liegt.

Die Tiefendaten können aber auch mit einem Tiefenschwellenwert so gewählt werden, dass er zwischen dem Häufungspunkt der geringsten Tiefe und den übrigen liegt. Die Knotenpositionen des Modells werden dann wiederum bevorzugt in Iterationsschritten aktualisiert werden, wobei für die vorab festgelegte Zahl von Punkten der 3D Punktwolke in jedem Iterationsschritt ein Punkt x zufällig ausgewählt und alle Knoten in Richtung auf x verschoben werden, wobei weiter das Ausmaß der Verschiebung jeweils für den Knoten am größten ist, der vor dem Iterationsschritt den geringsten Abstand zu x besaß. Das Ausmaß der Verschiebung aller Knoten wird dazu ggf. mit der Anzahl der Iterationsschritte abnehmend eingerichtet. Die Anzahl der zufällig gewählte Punkte x bzw. der Iterationsschritte beträgt dann z.B. 10 % der Gesamtzahl der Punkte in der Punktwolke.

Vorteilhaft ist weiter, dass vor jedem Iterationsschritt zu dem ersten Knoten mit dem geringsten Abstand zum gewählten Punkt x ein zweiter Knoten gewählt wird, der ein Nachbar des ersten Knotens ist und dessen Abstand zum ersten Knoten während der Verschiebung der Knoten einen vorgegeben Wert nicht übersteigt.

Die Erfindung wird nachfolgend näher erläutert anhand der Figuren. Dabei zeigt:

Fig. 1  eine Beispielaufnahme einer Testperson mit einer TOF Kamera. Das obere Bild zeigt die Amplitudendaten, in der Mitte ist die Tiefenkarte dargestellt, und unten ist das daraus resultierende segmentierte Bild zu sehen,

Fig. 2  die Graphenstruktur, die als einfaches Modell für den menschlichen Körper dient. Die Kanten definieren die Nachbarschaften der SOM,

Fig. 3  die Punktwolke aus Abtastpunkten der sichtbaren Oberfläche einer Person vor der Kamera. Die Graphenstruktur repräsentiert das Modell zur Schätzung der Pose, das mit der SOM Lernregel in die Daten gelegt wird, und

Fig. 4 -  Eine Auswahl von Bildern aus einer Videosequenz, welche eine Abfolge von Gesten zeigt. Das Modell, mit dem die Pose geschätzt wird, ist in jedes Bild als 2D Projektion eingezeichnet. Die Kanten des Modells, welche zum Kopf und zum Oberkörper gehören, sind weiß gezeichnet, wohingegen die Kanten der Arme schwarz dargestellt sind.

Der erste Schritt des erfindungsgemäßen Verfahrens besteht darin, den menschlichen Körper vom Hintergrund des Bildes freizustellen (zu segmentieren). Es wird dazu ein einfaches Schwellenwertverfahren verwendet, welches sowohl die Tiefenkarte als auch das Amplitudenbild nutzt. Die von der TOF Kamera aufgezeichneten Helligkeits- und Tiefenwerte werden dazu jeweils in ein Histogramm eingetragen. Die Schwellenwerte für beide Bilder werden anhand der Histogramme für jedes Bild adaptiv bestimmt, wie nachfolgend erläutert.

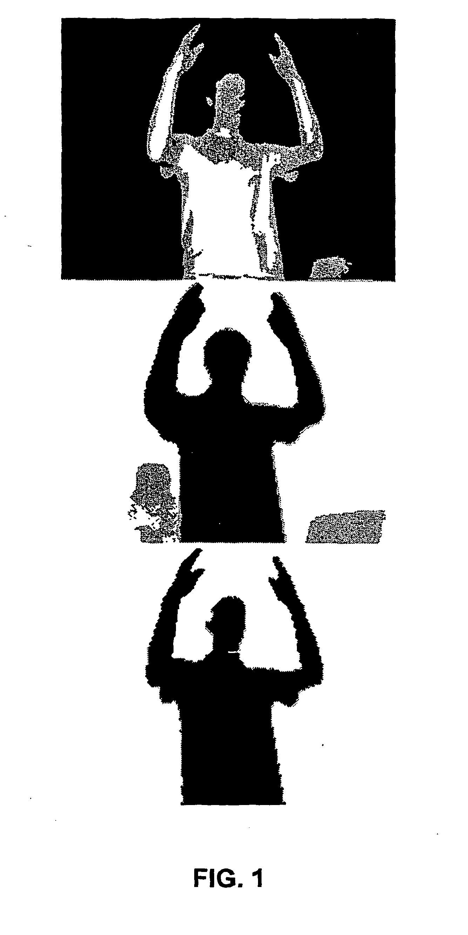

Im Falle des Amplitudenbildes (vgl. Fig. 1 oben) korrespondiert der Pixelwert zu der Lichtintensität der aktiven IR-Beleuchtung der TOF Kamera, welche von der Szene zurück in die Kamera gelangt. Das Amplitudenbild kann auch als Maß für die Konfidenz in die Messwerte der Tiefenkarte betrachtet werden, weil es direkt mit dem Signal/Rausch-Verhältnis der Messung in Zusammenhang steht. Die Abschwächung der Amplitude ist proportional zum quadrierten Abstand des Objektes vor der Kamera. Damit erscheinen Objekte, die sich nahe an der Kamera befinden, in der Regel deutlich heller, als Objekte des Hintergrundes.

Um einen adaptiven Schwellenwert zu finden, welcher den Hintergrund von dem Vordergrund trennt, wird dieser unter der Annahme bestimmt, dass es in dem Histogramm der Helligkeitswerte genau zwei wesentliche Maxima gibt, um die herum die Anzahlen der Helligkeitswerte jeweils näherungsweise einer Gaussverteilung folgen. Unter diesen Umständen spricht man von einer bimodalen Verteilung, und der Schwellenwert wird so gewählt, dass er die beiden Verteilungen möglichst gut voneinander trennt. Eine genauere Segmentierung auf Basis allein eines Schwellenwertes für das Amplitudenbild ist generell schwierig, da verschiedene Objekte auch unterschiedliche Reflektionseigenschaften für Infrarotlicht aufweisen können.

Im Falle der Tiefenkarte (Fig. 1 mittig) wird im Histogramm der Tiefenwerte die Annahme einer bimodalen Verteilung verletzt, wenn sich mehrere Objekte in unterschiedlichen Abständen vor der Kamera befinden. Es wird deshalb angenommen, dass jedes Maximum in dem Histogramm mit einem Objekt korrespondiert, wenn sich die Objekte tatsächlich in unterschiedlichen Abständen vor der Kamera befinden. Der zur Segmentierung verwendete Schwellenwert wird als derjenigen bestimmt, der das Maximum des der Kamera nächstgelegenen Objekts von den restlichen Maxima trennt.

Bei der Kombination von segmentiertem Amplitudenbild und segmentierter Tiefenkarte für die endgültige Segmentierung werden nur die Pixel zum Vordergrund gezählt, die sowohl im Amplitudenbild als auch in der Tiefenkarte dem Vordergrund zugeordnet wurden. Es wird also die Schnittmenge aller Pixel verwendet, die nicht durch eine der beiden Schwellenwert-Überschreitungen ausgeschlossen werden.

Bevorzugt wird noch mit Hilfe von an sich bekannten Verfahren das größte zusammenhängende Segment von Vordergrundpixeln gesucht, und nur Pixel dieses Segmentes werden endgültig dem Vordergrund zugeordnet, alle weiteren Pixel werden als dem Hintergrund zugehörig betrachtet. Ein Ergebnis einer solchen Segmentierung ist beispielhaft in Fig. 1 unten zu sehen. Dieser Verfahrensschritt ist günstig für die Segmentierung, wenn sich relativ dicht hinter der einzuschätzenden Person andere Objekte oder Personen aufhalten. Steht die Zielperson deutlich isoliert und ist dies auch bekannt, dann kann das Aufsuchen zusammenhängender Segmente übersprungen werden.

Bei den identifizierten Vordergrundpixeln kann davon ausgegangen werden, dass sie Abtastpunkte der sichtbaren Oberfläche - der Vorderseite - der Person vor der Kamera darstellen.

Da die intrinsischen Parameter der Kamera wie Brennweite und Größe der Pixel bekannt sind, lässt sich der Prozess der Bildgebung mit Hilfe der von der TOF Kamera gemessenen Tiefenwerte umkehren. Damit lassen sich für jedes Pixel die 3D Raumkoordinaten des Punktes in der Szene bestimmen, welcher auf dieses Pixel abgebildet wurde. Für ein Pixel mit Pixelkoordinaten $(x, y)$ und zugehörigem Tiefenwert r ergibt sich der entsprechende 3D Raumpunkt $\vec{x}$ mittels folgender Formel:

$$\vec{x} = r \frac{((c_x - x) \cdot s_x, (c_y - y) \cdot s_y, f)^T}{\left\| ((c_x - x) \cdot s_x, (c_y - y) \cdot s_y, f)^T \right\|_2} \qquad (1)$$

Hier beschreibt $(c_x, c_y)$ die Pixelkoordinaten des Punktes, an dem die optische Achse der Kamera auf den Bildsensor trifft. Die Parameter $s_x$ und $s_y$ geben Höhe und Breite der Pixel an, und $f$ ist die Brennweite der Linse. Der Operator $(.,.,.)^T$ transponiert einen Zeilenvektor, und $\|.\|_2$ beschreibt die Euklidische Norm.

Wendet man obige Formel auf alle Vordergrundpixel des segmentierten Bildes an erhält man eine Punktwolke in 3D, die die dreidimensionale Gestalt der Person vor der Kamera repräsentiert.

Dieser Ansatz hat zwei wesentliche Vorteile:

(i) Die Darstellung ist skaleninvariant, da die Person im dreidimensionalen Raum stets die gleiche Größe hat, unabhängig von ihrem Abstand zu der Kamera;

(ii) Körperteile, die vor dem Oberkörper in Richtung der Kamera ausgestreckt sind und diesen teilweise verdecken, können aufgrund der Variation der Tiefenwerte trotzdem leicht gefunden werden. Diese Information geht hingegen in 2D Projektionen normaler Kameras verloren, was dort zu einer weitaus komplexeren Problemstellung führt.

Im zweiten Schritt des erfindungsgemäßen Verfahrens wird ein vereinfachtes Skelettmodell in die 3D Punktwolke eingepasst, die die Vorderseite der einzuschätzenden Person darstellt. Das Skelettmodell ist dabei vorzugsweise einfach gehalten und gibt nur die für die Posenschätzung relevanten, anatomischen Gegebenheiten des menschlichen Körpers wieder.

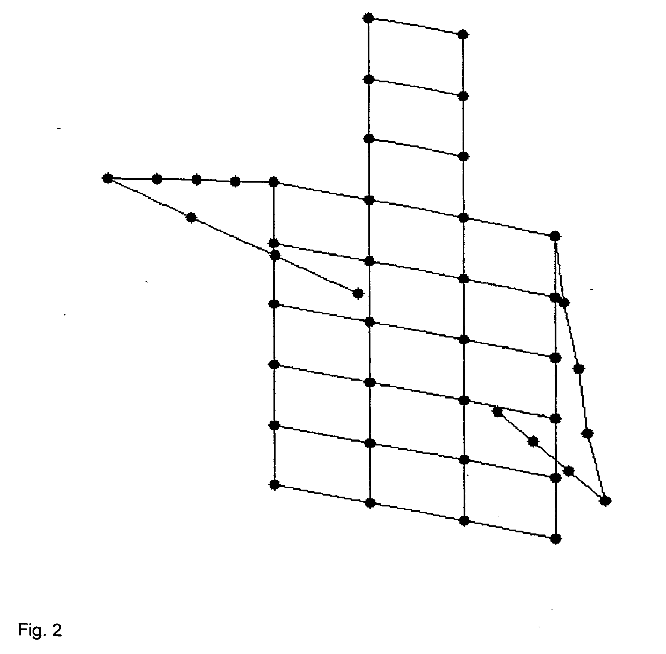

In Fig. 2 ist das Modell dargestellt, das hier exemplarisch verwendet wird. Das Modell wird durch einen Graphen beschrieben, der aus 44 Knoten für den Oberkörper, den Kopf und die Arme besteht. Der anatomische Aufbau des Körpers wird dabei durch die Kanten des Graphen beschrieben. So sind z.B. die Arme durch Ketten aus paarweise durch Kanten verbundenen Knoten repräsentiert, wohingegen der Oberkörper durch ein zweidimensionales Gitter beschrieben wird. Es dürfte dem Fachmann offensichtlich sein, dass die konkrete Ausgestaltung des Skelettmodells je nach zu bewertendem Bildausschnitt auszuwählen ist, und somit hierin keine Einschränkung der Erfindung gesehen werden soll. Das Modell kann z.B. ohne weiteres auf die Repräsentation von Beinen erweitert werden, indem am unteren Ende zwei weitere Ketten von paarweise verbundenen Knoten hinzugefügt werden.

Man kann nun erfindungsgemäß das Skelettmodell zugleich als eine Selbst-Organisierende Karte (SOM) begreifen und entsprechend verwenden.

Eine SOM stellt grundsätzlich eine mit einem neuronalen Netz realisierte Zuordnung von Datenpunkten $\vec{x}$ zu so genannten Kodebuchvektoren $\vec{v}$ dar. Ziel ist es dabei, eine Zuordnung zu finden, die die Eingabedaten, wie bei der Vektorquantisierung, mit möglichst geringem mittlerem quadratischem Fehler repräsentiert. Dazu wird eine SOM mittels geeigneter Lernregeln trainiert, die die Kodebuchvektoren so im Eingaberaum verschiebt, dass der Fehler minimiert wird.

Als Erweiterung der Vektorquantisierung wird dem Netz eine Nachbarschaftsstruktur für die Kodebuchvektoren vorgegeben. Diese Nachbarschaftsstruktur kommt bei jedem Lernschritt, den das Netz durchläuft, zum Tragen: Ein zufälliger Trainingsdatenpunkt $x$ wird gewählt, und der ihm am nächsten liegende Kodebuchvektor $v_*$ wird bestimmt. Nun wird eine Lernregel auf den Kodebuchvektor $v^*$ angewandt, die ihn in Richtung des Trainingsdatenpunktes $x$ verschiebt. Zusätzlich werden auch die in der Nachbarschansstruktur definierten Nachbarn von $v^*$ in Richtung des Trainingsdatenpunktes $x$ verschoben. Dies sorgt dafür, dass Kodebuchvektoren, die über die Nachbarschaftsstruktur nahe beieinander liegen, nach dem Training des Netzes auch im Eingaberaum räumlich gesehen nahe beieinander liegen. Im Folgenden werden die Kodebuchvektoren hier als Knoten bezeichnet.

Die erfindungsgemäß verwendete SOM mit Knoten und Nachbarschaftsstruktur ist also auch in Fig. 2 gezeigt. Die Knoten sind als Punkte dargestellt und die Kanten definieren die Nachbarschaften. So hat ein Knoten all die Knoten als Nachbarn, mit denen er direkt über eine Kante verbunden ist.

Die SOM wird durch eine iterative Lernregel für jedes segmentierte Bild einer Videosequenz auf den Pixeln, die zuvor dem Vordergrund zugeordnet wurden, trainiert. Für das erste Bild einer Sequenz dient z.B. die Pose aus Fig. 2 als Initialisierung des Modells. Während der Initialisierung wird das Modell in den Schwerpunkt der 3D Punktwolke verschoben. Die Größe des Modells wird zu Beginn einmalig an die Größe der Person vor der Kamera angepasst. Ist sie einmal korrekt gewählt, braucht sie während des laufenden Verfahrens nicht weiter angepasst zu werden, weil das erfindungsgemäße Verfahren skaleninvariant arbeitet. Die Wahl der initialen Größe des Modells ist dabei kein besonders kritischer Parameter, und das Verfahren ist robust gegenüber relativ starken Variationen bei der Initialisierung.

Das Training aller folgenden Bilder der Sequenz wird jeweils mit dem Modell, das auf dem vorherigen Bild gelernt wurde, gestartet.

Die Anpassung des Modells an ein neues Bild beinhaltet jeweils ein komplettes Training der SOM, d.h. das Modell erlernt mittels der pattern-by-pattern Lernregel, bei der die Lernregel iterativ jeweils Trainingsdatenpunkt für Trainingsdatenpunkt angewandt wird, die Struktur der 3D Punktwolke. Bei diesem iterativen Verfahren werden zufällig Datenpunkte $x$ aus der Menge aller Trainingsdaten gezogen, und das Modell wird mittels der folgenden Lernregeln adaptiert:

$$\vec{v}_*^{t+1} = \vec{v}_*^{t} + \varepsilon_*^{t} \cdot (\vec{x} - \vec{v}_*^{t}) \tag{2}$$

$$\vec{v}_n^{t+1} = \vec{v}_n^{t} + \varepsilon_n^{t} \cdot (\vec{x} - \vec{v}_n^{t}) \tag{3}$$

Hier bezeichnet $\vec{v}_*$ den Knoten, welcher im Bezug auf ein Distanzmaß $d(\vec{x},\vec{y})$ am nächsten am Trainingsdatenpunkt $\vec{x}$ liegt. Als Distanzmaß wird z.B. die Euklidische Norm verwendet. Die Knoten $\vec{v}_n$ repräsentieren die Nachbarn des Knotens $\vec{v}_*$, wie durch das Modell aus Fig. 2 vorgegeben. Die Werte $\varepsilon_*^{t}$ und $\varepsilon_n^{t}$ stellen jeweils die Lernraten für den nächsten Knoten sowie seine Nachbarn dar. Die Lernrate $\varepsilon_*^{t}$ wird dabei folgendermaßen gewählt:

$$\varepsilon_*^{t} = \varepsilon_i \cdot (\varepsilon_f / \varepsilon_i)^{t/t_{\max}} \tag{4}$$

Hier beschreibt $t \in \{0, ..., t_{\max}\}$ den aktuellen Lernschritt für ein Bild und $t_{\max}$ stellt die maximale Anzahl von Lernschritten dar, die auf diesem Bild durchgeführt werden. Die initiale Lernrate $\varepsilon_i$ und die finale Lernrate $\varepsilon_f$ werden hier exemplarisch auf die Werte 0, 1 und 0, 05 respektive, gesetzt. Die Lernrate für die Nachbarn wird auf $\varepsilon_n^{t} = \varepsilon_*^{t} / 2$ gesetzt.

Mit dieser Lernregel kann nicht immer garantiert werden, dass die Nachbarschaftsstruktur des Modells in Bezug auf die Extremitäten, also insbesondere hier die Arme, erhalten bleibt. Zur Verdeutlichung soll folgendes Beispiel dienen: Die Hände einer Person berühren sich vor deren Oberkörper. Werden die Hände nun wieder auseinander bewegt, so kann es z.B. passieren, dass das Modell den letzten Knoten des linken Armes nutzt, um Datenpunkte zu repräsentieren, die eigentlich zu der rechten Hand gehören. Nun kann dies dazu führen, dass der letzte Knoten des linken Modellarmes weiterhin von Punkten der rechten Hand angezogen wird, auch wenn die Hände sich bereits weiter voneinander entfernt haben. Der linke Arm reicht dann scheinbar durch einen Teil des Raumes, in dem überhaupt keine Datenpunkte liegen.

Grundsätzlich ist die Lernregel der SOM dazu in der Lage, dieses Problem über die Zeit hinweg aufzulösen. Allerdings wird pro Bild nur eine sehr geringe Zahl von Lernschritten durchgeführt, um eine gute Laufzeit zu gewährleisten und dies kann dann vorübergehend zu einer falschen Schätzung der Pose führen.

Um dieses Problem zu umgehen, lassen sich die oben genannten Regeln auf einfache Weise erweitern, so dass der Lernprozess in dem beschriebenen Szenario schneller erfolgreich ist. Diese Erweiterung verhindert, dass sich benachbarte Knoten weiter als eine vorgegebene Distanz voneinander entfernen. Dies wird mit der folgenden Regel erreicht, die nach den eigentlichen Lernregeln aus den Gleichungen (2) und (3) angewandt wird, wenn der Abstand $d(\vec{v}_*, \vec{v}_n^a)$ einen vorgegebenen Schwellenwert $\phi$ übersteigt:

$$\vec{v}_* = \vec{v}_n^a + \phi \cdot \frac{(\vec{v}_* - \vec{v}_n^a)}{\left\|\vec{v}_* - \vec{v}_n^a\right\|_2} \cdot \qquad (5)$$

Hier stellt $\vec{v}_n^a$ einen bestimmten Nachbarn des Knotens $\vec{v}_*$ dar, der als Anker bezeichnet wird. Die Regel garantiert, dass der Abstand zwischen dem Knoten $\vec{v}_*$ und seinem Anker nie größer als $\phi$ wird. Der Schwellenwert $\phi$ hängt dabei von der Skalierung des Modells ab. Der Anker eines Knotens ist jeweils als der Nachbarknoten definiert, der in Bezug auf die Graphenstruktur des Modells auf dem kürzesten Pfad auf dem Weg zur Mitte des Oberkörpers in dem Modell liegt, d.h. es ist der Nachbarknoten, der über die geringste Anzahl von Kanten mit der Mitte des Oberkörpers verbunden ist.

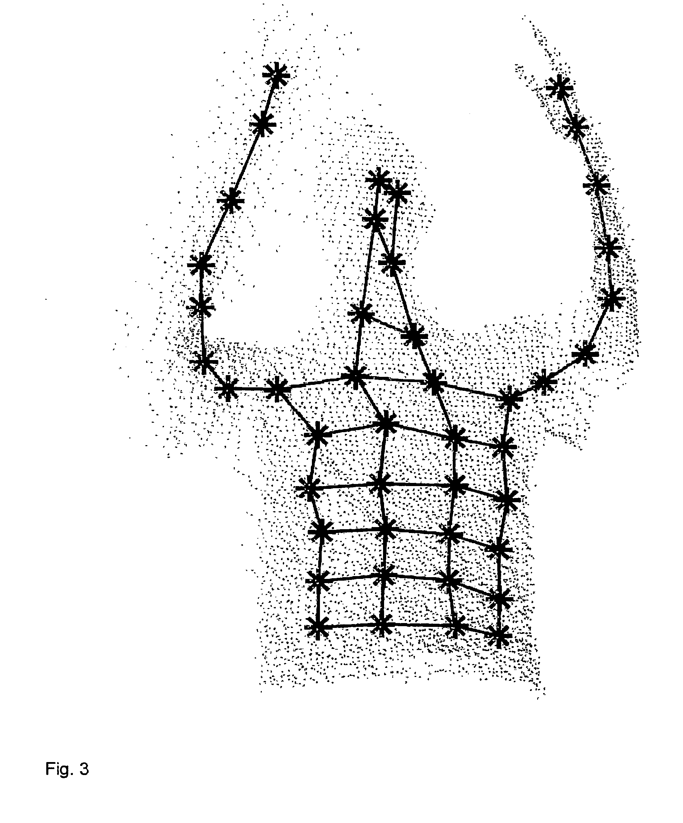

Eine beispielhafte Schätzung der Pose ist in Fig. 3 gezeigt. Das Bild zeigt die Punktwolke zu den Vordergrundpixeln des segmentierten Bildes aus Fig. 1 unten. Das an die Daten angepasste Modell ist hier in die Punktwolke hinein gezeichnet. Es ist zu erkennen, dass das Modell die Anatomie der Person korrekt wiedergibt. So ist der Oberkörper gut durch das zweidimensionale Gitter abgedeckt, einige Knoten reichen bis in den Kopf hinein und die beiden eindimensionalen Ketten von Knoten folgen den beiden Armen. Somit lassen sich die Positionen von wichtigen Körperteilen, wie z.B. den Händen, direkt aus den korrespondierenden Knoten des Modells in 3D entnehmen.

Fig. 4 schließlich zeigt eine Reihe von Gesten aus einer Videosequenz. Jedes dieser Bilder zeigt das segmentierte Amplitudenbild und die darin eingezeichnete 2D Projektion des Modells. Das Modell vermag den Armen zu folgen, und dies sogar in schwierigen Situationen, wenn die Arme einander dicht vor dem Oberkörper kreuzen. Das Modell ist auch in der Lage die Position des Kopfes robust zu schätzen, auch wenn in einigen Bildern ein großer Teil des Kopfes von den Armen verdeckt wird.

Ein wesentlicher Vorteil des erfindungsgemäßen Verfahrens ist, dass das Training des Modells für jedes neue Bild sehr schnell zu einem Abschluss kommt. Es konnte empirisch bestimmt werden, dass während des Trainings nur eine sehr geringe Menge der Daten aus der 3D Punktwolke genutzt werden muss, auch dann, wenn die Person vor der Kamera sehr schnelle Bewegungen vollführt. Die Fig. 3 enthält ungefähr 6500 Vordergrundpixel. Jedoch werden nur etwa $t_{max}$ = 650 Datenpunkte zufällig ausgewählt und in zufälliger Reihenfolge für das Training der SOM mit der pattern-by-pattern Lernregel genutzt. Damit ist der Rechenaufwand des Verfahrens äußerst gering, und die Schätzung der Pose ist mit einer Bildrate von bis zu 25 Bildern pro Sekunde auf einem 2.0 GHz PC möglich.

Grundsätzlich kann das erfindungsgemäße Verfahren auf jede Form von beweglichen Objekten erweitert werden, deren Pose in 3D geschätzt werden soll. Die Kombination aus TOF Kameradaten und die Nutzung einer SOM erlaubt eine einfache und effiziente Implementierung, wenn dabei Einschränkungen der Bewegungsmöglichkeiten von Objektelementen existieren, die durch eine SOM mit Knoten und Nachbarschaftsstruktur modelliert werden können. Dies ist insbesondere der Fall, wenn die einzuschätzenden Objekte bekanntermaßen fest miteinander verbundene Elemente besitzen, die zugleich gegeneinander beweglich ausgebildet sind. Der menschliche Körper ist im Sinne der Erfindung nur ein Beispiel für ein solches Objekt.

Im Falle der Schätzung von menschlicher Pose ermöglicht das Verfahren die echtzeitfähige Erkennung von menschlichen Gesten. So erlaubt das System einerseits direkt die Interpretation von Zeigegesten, da die Positionen von Kopf und Hand im Raum bekannt sind. Damit lässt sich die Richtung, in die gezeigt wird identifizieren, indem man einem Strahl ausgehend vom Kopf entlang der Hand definiert. Dieser Strahl entspricht intuitiv der Zeigerichtung. Sind zusätzlich die Raumkoordinaten des Objektes, auf das gezeigt wird, bekannt, lässt sich daraus exakt die Stelle des Objektes ermitteln, auf die gezeigt wird. Als Beispiel kann z.B. eine Präsentation mit PowerPoint-Folien dienen, bei der ein Laserpointer durch einen virtuellen Laserpointer ersetzt wird, d.h. es wird ein roter Punkt an der Stelle auf den projizierten Folien eingeblendet, auf die der Vortragende zeigt.

Des Weiteren lässt sich das erfindungsgemäße Verfahren nutzen, um ein System zur Erkennung von komplexeren Gesten auf der Basis von visuellen, raum-zeitlichen Merkmalen zu entwickeln. Die Auswertung solcher raum-zeitlicher Merkmale stellt hohe Ansprüche an die Rechenleistung des Systems. Sind die Positionen einiger Landmarken, wie z.B. der Hände bekannt, so kann sich die Auswertung der raum-zeitlichen Merkmale auf eben die Regionen, in denen sich die Hände befinden, beschränken. Zudem ermöglicht das Wissen über die relative Lage der Landmarken die detektierten raum-zeitlichen Merkmale zueinander in einen größeren Kontext zu setzen, was die Erkennung der Gesten eindeutiger und damit robust macht. Ein derart aufgebautes Verfahren ist dann in der Lage, komplexe Gesten, die als Eingabe für ein computergestütztes System dienen können, zu erkennen. Derartige Systeme können von technischen Steuerungsanlagen im medizinischen und industriellen Bereich, über Informationsterminals sowie Multimediasysteme für den häuslichen Gebrauch, bis hin zu Computerspielen reichen.

**Patentansprüche**

1. Verfahren zur echtzeitfähigen, rechnergestützten Analyse einer eine veränderliche Pose enthaltenden Bildsequenz eines aus gegeneinander beweglichen und miteinander verbundenen Elementen bestehenden Objekts,
   wobei die Einzelbilder der Bildsequenz mit einer time-of-flight, TOF, Kamera computerbearbeitbar aufgezeichnet sind und Helligkeits- und Entfernungsdaten als Funktionen der Pixelkoordinaten der Kamera für jedes Bild der Sequenz aufweisen,
   mit den folgenden Schritten:

   a. Erfassen der das Objekt abbildenden Pixel eines Einzelbildes,
   b. Berechnen einer dreidimensionalen, 3D, Punktwolke in einem virtuellen Raum, welche die für die Kamera sichtbare Oberfläche des Objekts repräsentiert, durch rechnerische Projektion objektabbildender Pixel in einen solchen Raum unter Berücksichtigung erfasster Entfernungsdaten zum Objekt,
   c. Einpassen eines aus Knoten und Kanten bestehenden Modells des Objekts in die rechnergenerierte 3D-Punktwolke zum Einzelbild, wobei die Knoten eine Auswahl von Elementen des Objekts und die Kanten die Verbindungen dieser Elemente untereinander repräsentieren,
   d. Iteratives Aktualisieren aller Knotenpositionen durch Anwenden einer Lernregel zum Trainieren einer Selbst-Organisierenden Karte mit einer vorab festgelegten Anzahl zufällig gewählter Punkte der Punktwolke,
   e. Wiederholen der Schritte a. bis d. für jedes nachfolgende Einzelbild der Sequenz, wobei für das Einpassen beim Schritt c. jeweils das Ergebnis des Schrittes d. des vorangegangen Bildes benutzt wird, und
   f. Ermitteln der sich verändernden Pose aus den in wenigstens repräsentativen Bildern der Bildsequenz erfassten Positionen vorbestimmter Knoten des Modells.

2. Verfahren nach Anspruch 1, **dadurch gekennzeichnet, dass** die Kamerapixel, auf die das Objekt abgebildet wird, durch eine Bildsegmentierung der Bildsequenz der TOF Kamera bestimmt werden.

3. Verfahren nach Anspruch 2, **dadurch gekennzeichnet, dass** zu jedem Bild zwei Schwellenwerte für Helligkeits- und Tiefendaten der TOF Kamera bestimmt werden und ein zusammenhängendes Gebiet von Kamerapixeln identifiziert wird, deren Messdaten größer als der Helligkeitsschwellenwert und kleiner als der Tiefenschwellenwert sind.

4. Verfahren nach Anspruch 3, **dadurch gekennzeichnet, dass** die Helligkeitsdaten in einem Histogramm aufgetragen und zwei Häufungspunkte identifiziert werden und der Helligkeitsschwellenwert so gewählt wird, dass er zwischen den Häufungspunkten liegt.

5. Verfahren nach Anspruch 3, **dadurch gekennzeichnet, dass** die Tiefendaten in einem Histogramm aufgetragen und mindestens zwei Häufungspunkte identifiziert werden und der Tiefenschwellenwert so gewählt wird, dass er zwischen dem Häufungspunkt der geringsten Tiefe und den übrigen liegt.

6. Verfahren nach einem der vorangehenden Ansprüche, **dadurch gekennzeichnet, dass** die Knotenpositionen des Modells in Iterationsschritten aktualisiert werden, wobei für die vorab festgelegte Zahl von Punkten der 3D Punktwolke in jedem Iterationsschritt ein Punkt x zufällig ausgewählt und alle Knoten in Richtung auf x verschoben werden, wobei das Ausmaß der Verschiebung jeweils für den Knoten am größten ist, der vor dem Iterationsschritt den geringsten Abstand zu x besaß.

7. Verfahren nach Anspruch 6, dadurch gekennzeichet, dass das Ausmaß der Verschiebung aller Knoten mit der Anzahl der Iterationsschritte abnehmend eingerichtet wird.

**8.** Verfahren nach einem der Ansprüche 6 oder 7, **dadurch gekennzeichnet, dass** die Anzahl der zufällig gewählte Punkte x bzw. der Iterationsschritte etwa 10 % der Gesamtzahl der Punkte in der Punktwolke beträgt.

**9.** Verfahren nach einem der Ansprüche 6 bis 8, **dadurch gekennzeichnet, dass** vor jedem Iterationsschritt zu dem ersten Knoten mit dem geringsten Abstand zum gewählten Punkt x ein zweiter Knoten gewählt wird, der ein Nachbar des ersten Knotens ist und dessen Abstand zum ersten Knoten während der Verschiebung der Knoten einen vorgegeben Wert nicht übersteigt.

**10.** Verfahren nach Anspruch 2 bis 9, **dadurch gekennzeichnet, dass** die geschätzte Pose als Benutzereingabe zur Steuerung eines computergestützten Systems dient.

**11.** Verfahren nach Anspruch 10, **dadurch gekennzeichnet, dass** das computergestützte System eine technische Steuerungsanlage im medizinischen oder industriellen Bereich darstellt.

**12.** Verfahren nach Anspruch 10, **dadurch gekennzeichnet, dass** das computergestützte System ein Informationsterminal darstellt

**13.** Verfahren nach Anspruch 10, **dadurch gekennzeichnet, dass** das computergestützte System ein Multimediasystem für den häuslichen Bedarf darstellt.

**14.** Verfahren nach Anspruch 10, **dadurch gekennzeichnet, dass** das computergestützte System ein Computerspiel darstellt.

**Claims**

**1.** A method for the real-time-capable, computer-assisted analysis of an image sequence of an object consisting of elements that can be moved relative to each other and are interconnected, said sequence containing a variable pose, wherein the individual images of the image sequence are recorded by way of a time-of-flight, TOF, camera such that said images can be processed by a computer, and contain brightness and distance data as functions of the pixel coordinates of the camera for each image of the sequence, comprising the following steps:

a. capturing the pixels of an individual image forming the object,
b. calculating a three-dimensional, 3D, point cloud in a virtual space, said point cloud representing the surface of the object that is visible to the camera, by a computational projection of object-imaging pixels in such a space, while taking captured distance data to the object into consideration,
c. fitting a model of the object consisting of nodes and edges into the computer-generated 3D point cloud for the individual image, wherein the nodes represent a selection of elements of the object and the edges represent the connections of said elements among each other,
d. iteratively updating all node positions by applying a learning rule for training a self-organizing map having a previously defined number of randomly selected points of the point cloud,
e. repeating steps a. to d. for each subsequent individual image of the sequence, wherein for the fitting in step c. the result of step d. of the preceding image is used in each case, and
f. determining the varying pose from the positions of predetermined nodes of the model which have been captured in at least representative images of the image sequence.

**2.** The method according to Claim 1, **characterized in that** the camera pixels onto which the object is imaged is determined by image segmenting of the image sequence of the TOF camera.

**3.** The method according to Claim 2, **characterized in that** two threshold values for the brightness and depth data of the TOF camera are determined for each image and a contiguous area of camera pixels is identified whose measurement data are larger than the brightness threshold value and smaller than the depth threshold value.

**4.** The method according to claim 3, **characterized in that** the brightness data are plotted in a histogram and at least two cluster points are identified and the brightness threshold value is selected such that it is between the cluster points.

**5.** The method according to claim 3, **characterized in that** the depth data are plotted in a histogram and at least two cluster points are identified and the depth threshold value is selected such that it is between the cluster point having the least depth and the others.

6. The method according to one of the preceding claims, **characterized in that** the node positions of the model are updated in iteration steps, a point x being randomly selected for the previously established number of points of the 3D point cloud in each iteration step and all nodes are shifted in the direction of x, the extent of the shift being in each case largest for that node that had the least distance from x prior to the iteration step.

7. The method according to claim 6, **characterized in that** the extent of the shift of all nodes is made to decrease with the number of iterations steps.

8. The method according to one of claims 6 or 7, **characterized in that** the number of randomly selected points x or of the iteration steps is about 10% of the total number of points in the point cloud.

9. The method according to one of claims 6 to 8, **characterized in that** prior to each iteration step, for the first node having the least distance from the selected point x, a second node is selected that is a neighbor of the first node and whose distance from the first node does not exceed a predetermined value during the shift of the nodes.

10. The method according to claim 2 to 9, **characterized in that** the estimated pose serves as user input for controlling a computer-assisted system.

11. The method according to claim 10, **characterized in that** the computer-assisted system represents a technical control installation in the medical or industrial field.

12. The method according to claim 10, **characterized in that** the computer-assisted system represents an information terminal.

13. The method according to claim 10, **characterized in that** the computer-assisted system represents a multimedia system for use at home.

14. The method according to claim 10, **characterized in that** the computer-assisted system represents a computer game.

**Revendications**

1. Procédé pour l'analyse assistée par ordinateur en huit temps d'une séquence d'images comprenant une pose variable d'un objet constitué d'éléments mobiles les uns par rapport aux autres et reliés les uns aux autres,
dans lequel les images individuelles de la séquence d'images sont enregistrées avec une caméra time-of-flight, TOF, de façon à pouvoir être travaillées par ordinateur et présentent des données de luminosité et de distance en tant que fonctions des coordonnées de pixels de la caméra pour chaque image de la séquence,
comprenant les étapes suivantes :

a. saisie des pixels d'une image individuelle formant l'objet ;
b. calcul d'un nuage de points tridimensionnel, 3D, dans un espace virtuel, qui représente la surface de l'objet visible pour la caméra, par projection arithmétique de pixels formant l'objet dans un tel espace en prenant en considération des données de distance saisies par rapport à l'objet ;
c. intégration d'un modèle de l'objet constitué de noeuds et d'arêtes dans le nuage de points 3D créé par ordinateur pour obtenir l'image individuelle, étant entendu que les noeuds représentent une sélection d'éléments de l'objet et les arêtes les liaisons de ces éléments entre eux ;
d. actualisation par itération de toutes les positions des noeuds par application d'une règle d'apprentissage pour développer une carte à organisation automatique comprenant un nombre déterminé préalablement de points choisis aléatoirement du nuage de points ;
e. répétition des étapes a. à d. pour chaque image individuelle suivante de la séquence, étant entendu que pour l'intégration de l'étape c., le résultat de l'étape d. de l'image précédente est à chaque fois utilisé ; et
f. détermination de la pose en cours de changement à partir des positions, saisies au moins dans des images représentatives de la séquence d'images, de noeuds prédéterminés du modèle.

2. Procédé selon la revendication 1, **caractérisé en ce que** les pixels de la caméra dans lesquels l'objet est formé sont déterminés par une segmentation d'image de la séquence d'images de la caméra TOF.

3. Procédé selon la revendication 2, **caractérisé en ce que** pour chaque image, deux valeurs de seuil sont déterminées pour les données de luminosité et de profondeur de la caméra et un secteur de pixels connexes de la caméra est identifié, dont les données de mesure sont supérieures à la valeur de seuil de la luminosité et inférieures à la valeur de seuil de la profondeur.

4. Procédé selon la revendication 3, **caractérisé en ce que** les données de luminosité sont inscrites dans un histogramme et deux points de cumul sont identifiés et **en ce que** la valeur de seuil de la luminosité est choisie de telle sorte qu'elle se situe entre les points de groupage.

5. Procédé selon la revendication 3, **caractérisé en ce que** les données de profondeur sont inscrites dans un histogramme et au moins deux points de cumul sont identifiés et **en ce que** la valeur de seuil de la profondeur est choisie de telle sorte qu'elle se situe entre le point de cumul de la profondeur la plus basse et les autres.

6. Procédé selon l'une des revendications précédentes, **caractérisé en ce que** les positions des noeuds du modèle sont actualisées dans des étapes d'itération, étant entendu que pour le nombre déterminé préalablement de points du nuage de points 3D, un point x est choisi aléatoirement à chaque étape d'itération et tous les noeuds sont déplacés dans la direction de x, étant entendu que l'amplitude du déplacement est à chaque fois la plus élevée pour le noeud qui possédait la plus faible distance par rapport à x avant l'étape d'itération.

7. Procédé selon la revendication 6, **caractérisé en ce que** l'amplitude du déplacement de tous les noeuds est définie de façon décroissante à mesure du nombre des étapes d'itération.

8. Procédé selon l'une des revendications 6 ou 7, **caractérisé en ce que** le nombre des points x choisis aléatoirement ou des étapes d'itération s'élève à environ 10 % du nombre total de points dans le nuage de points.

9. Procédé selon l'une des revendications 6 à 8, **caractérisé en ce qu'**avant chaque étape d'itération relative au premier noeud possédant la distance la plus faible par rapport au point x choisi, un deuxième noeud est choisi, qui est adjacent au premier noeud et dont la distance par rapport au premier noeud ne dépasse pas une valeur prédéterminée pendant le déplacement des noeuds.

10. Procédé selon l'une des revendications 2 à 9, **caractérisé en ce que** la pose estimée sert d'entrée d'utilisateur pour la commande d'un système assisté par ordinateur.

11. Procédé selon la revendication 10, **caractérisé en ce que** le système assisté par ordinateur constitue une installation de commande technique dans le domaine médical ou industriel.

12. Procédé selon la revendication 10, **caractérisé en ce que** le système assisté par ordinateur constitue un terminal d'information.

13. Procédé selon la revendication 10, **caractérisé en ce que** le système assisté par ordinateur constitue un système multimédia destiné à l'usage domestique.

14. Procédé selon la revendication 10, **caractérisé en ce que** le système assisté par ordinateur constitue un jeu informatique.

FIG. 1

Fig. 2

Fig. 3

Fig. 4

# EP 2 430 614 B1

**IN DER BESCHREIBUNG AUFGEFÜHRTE DOKUMENTE**

**In der Beschreibung aufgeführte Nicht-Patentliteratur**

- **AGARWAL, A. ; TRIGGS, B.** Recovering 3D Human Pose from Monocular Images. *IEEE Transactions on Pattern Analysis and Machine Intelligence,* 2006, vol. 28 (1), 44-58
- **ROSALES, R. ; SCLAROFF, S.** Inferring Body Pose Without Tracking Body Parts. *Proceedings of Computer Vision and Pattern Recognition,* 2000, 721-727
- **SHAKHNAROVICH, G. ; VIOLA, P. ; DARRELL, T.** Fast Pose Estimation with Parameter-Sensitive Hashing. *Proceedings of International Conference on Computer Vision,* 2003, 750-757
- **WEIK, S. ; LIEDTKE, C.-E.** Hierarchical 3D Pose Estimation for Articulated Human Body Models from a Sequence of Volume Data. *Robot Vision,* 2001, 27-34
- **PALAGYI, K. ; KUBA, A.** A Parallel 3D 12-Subiteration Thinning Algorithm. *Graphical Models and Image Processing,* 1999, vol. 61 (4), 199-221
- **YANG, H.-D. ; LEE, S.-W.** Reconstructing 3D Human Body Pose from Stereo Image Sequences Using Hierarchical Human Body Model Learning. *ICPR '06: Proceedings of the 18th International Conference on Pattern Recognition,* 2006, 1004-1007
- **WINKLER, S. ; WUNSCH, P. ; HIRZINGER, G.** A Feature Map Approach to Real-Time 3-D Object Pose Estimation from Single 2-D Perspective View. *Mustererkennung 1997 (Proc. DAGM,* 1997, 129-136
- **ZHU, Y. ; DARIUSH, B. ; FUJIMURA, K.** Controlled Human Pose Estimation from Depth Image Streams. *CVPRW '08 IEEE Computer Society Conference on Computer Vision and Pattern Recognition Workshops,* 2008, 1-8
- **SEBASTIAN WELK ; C.-E. LIEDTKE.** Hierarchical 3D Pose Estimation for Articulated Human Body Models from a Sequence of Volume Data. *Proc. of the International Workshop on Robot Vision table of contents,* 2001
- **MARTIN HAKER ; MARTIN BÖHME ; THOMAS MARTINETZ ; ERHARDT BARTH.** Deictic gestures with atime-of-flight camera. *GW 2009, The 8th International Gesture Workshop - Feb 25-27, at the ZiF-Center for Interdisciplinary Research at Bielefeld University, Germany,* 2009
- **PIA BREUER ; CHRISTIAN ECKES ; STEFAN MÜLLER.** Hand Gesture Recognition with a Novel IR Time-of-Flight Range Camera - A Pilot Study. *Proceedings of the Mirage 2007, Computer Vision/Computer Graphics Collaboration Techniques and Applications, Rocquencourt, France,* 28. Marz 2007, 247-260